# FASCICULE DE BREVET EUROPEEN

(11) **EP 2 206 331 B1**
(45) Date de publication et mention de la délivrance du brevet: **23.03.2011**
(21) Numéro de dépôt: 08838434.2
(22) Date de dépôt: 02.09.2008
(51) Int. Cl.: H04M 11/06, H04Q 11/04, H04L 29/06, H04B 10/24, H04L 12/28

(54) **RECONFIGURATION DE DISPOSITIFS DE TERMINAISON DE RESEAU**
UMKONFIGURATION VON NETZWERKABSCHLUSSEINRICHTUNGEN
RECONFIGURATION OF NETWORK TERMINATION DEVICES

(30) Priorité: 04.09.2007 FR 0706193
(43) Date de publication de la demande: 14.07.2010
(73) Titulaire: FRANCE TELECOM, 75015 Paris (FR)
(72) Inventeur: BOURGART, Fabrice, F-22700 Perros Guirec (FR)
(74) Mandataire: Cabinet Plasseraud
(86) Numéro de dépôt international: PCT/FR2008/051561
(87) Numéro de publication internationale: WO 2009/047413

(56) Documents cités:
- EP-A- 1 126 639
- US-A1- 2003 041 136
- US-A1- 2003 053 443
- US-B1- 6 526 092
- US-B1- 7 012 899
- US-B1- 7 111 072

## Description

L'invention se rapporte au domaine des réseaux de télécommunications, et concerne en particulier les communications sur au moins une ligne, entre un dispositif de terminaison de ligne et un groupe de dispositifs de terminaison de réseau.

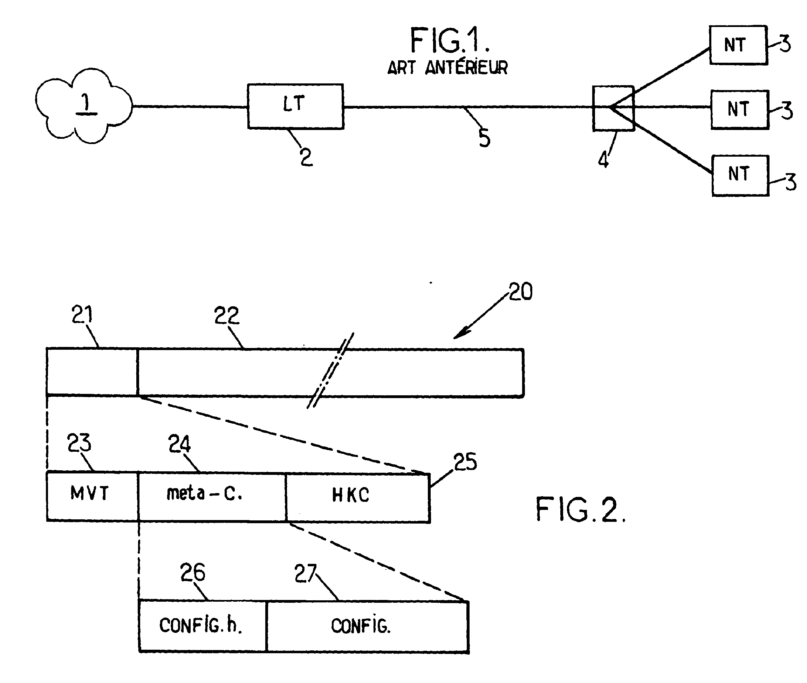

La figure 1 représente schématiquement un tel réseau arborescent.

Un dispositif de terminaison de ligne 2 est relié par une ligne 5, par exemple une fibre optique ou une ligne de cuivre, à un groupe de dispositifs de terminaison de réseau 3. Des diviseurs représentés sous la référence 4, par exemple des diviseurs optiques, peuvent être mis en oeuvre pour partager les signaux provenant du dispositif de terminaison de ligne 2 entre les dispositifs de terminaison de réseau 3. Le dispositif 2 assure l'interface avec le reste du réseau de télécommunications représenté sous la référence 1, par exemple le réseau Internet.

Chaque dispositif de terminaison de réseau comprend un modem, permettant d'effectuer des fonctions comme la modulation, la démodulation, le multiplexage, le démultiplexage etc., en fonction du protocole de communication utilisé sur la ligne.

La ligne 5 est partagée entre plusieurs dispositifs de terminaison de réseau 3. Le dispositif 2 peut éventuellement gérer l'allocation de cette ressource partagée entre les dispositifs 3. Par exemple, les dispositifs 3 peuvent disposer chacun d'une plage de temps pour émettre des messages vers le dispositif de terminaison de ligne 2. C'est le dispositif 2 qui envoie des messages aux dispositifs 3 signifiant lequel de ces dispositifs est en droit d'émettre pendant une plage de temps donnée. Une telle technologie est par exemple la technologie AMRT (Accès Multiple à Répartition dans le temps ou TDMA en anglais).

Les communications sur la ligne sont régies par un protocole, c'est-à-dire un ensemble de descriptions de formatage, de segmentation, et de partage de données entre plusieurs applications et plusieurs dispositifs de terminaison de réseau.

Un protocole de communication sur la ligne englobe aussi bien le format des données utiles échangées sur la ligne, (par exemple découpées en octets ou en cellules ATM), que le format des trames échangées (par exemple un format définissant les en-têtes de trame), le type de partage ou multiplexage des ressources (par exemple WDM, de l'anglais « Wavelength Division Multiplexing" ou Multiplexage en longueur d'onde), le mode de communication (PMP par exemple), la nature du trafic supporté (semi-duplex, full-duplex, simplex, etc.), etc.

Le protocole des communications sur la ligne est susceptible d'évoluer. D'autres technologies d'accès peuvent être utilisées.

Par exemple, dans le cas d'une ligne optique, le protocole mis en oeuvre a connu une évolution passant d'un multiplexage fixe d'octets (format TPON de l'anglais « Telecommunication over Passive Optical Network » ou en français Télécommunications sur un réseau optique passif, et mode de transmission optique passive point à multi-points selon la recommandation ITU-T G.982 et la norme ETSI ETS.300 463) à un multiplexage dynamique de cellules ATM (de l'anglais « Asynchronous Transfer Mode » ou Multiplexage temporel asynchrone en français) natif ou sur trame STM1/STM4, de l'anglais « Synchronous Transport Module » ou en français multiplexage temporel synchrone (format APON puis BPON, de l'anglais « ATM-based PON » et « Broadband PON » respectivement, et mode de transmission optique passive point à multi-points basé sur l'ATM selon les recommandations ITU-T G.983) ou à un multiplexage Ethernet natif (format EPON, GEPON, ou GigE, de l'anglais « Ethernet PON », «Gigabit Ethernet PON », et « Gigabit Ethernet », en mode point à multi-points selon un standard IEEE), puis enfin à un multiplexage dynamique d'octets (protocole GPON, de l'anglais « Gigabit PON »).

Le protocole régissant les communications sur la ligne est bien entendu toujours susceptible d'évoluer, peut-être selon un format avec une encapsulation MPLS, de l'anglais « Multi-Protocol Label Switching ». D'autres formats de multiplexages d'intégration de services apparaitront probablement.

Il est connu de remplacer les dispositifs de terminaison de réseau 3 pour effectuer ces mises à jour protocolaires. Toutefois, la mise en oeuvre de cette solution est complexe et coûteuse, du fait de la fabrication de nouveaux dispositifs, et des opérations de remplacement à prévoir pour les terminaisons de réseau. De plus, une telle solution nécessite une interruption du service le temps de remplacer le dispositif de terminaison de réseau.

Une solution alternative consiste à fournir à chaque utilisateur un support du type clé USB mémorisant un programme de reconfiguration de dispositif de terminaison de réseau. Avec cette dernière solution, dans le cas de communications en mode point-à-multipoints ou PMP (de l'anglais « Point to MultiPoints »), les modifications affectant une pluralité de dispositifs de terminaison de réseau doivent être effectuées dans un intervalle de temps relativement court, et de manière simultanée, pour que les communications sur la ligne partagée fonctionnent correctement.

Il est connu du document EP1126639 une transmission par fibre optique de trames de différentes stuctures adaptées chacune à un mode de communication.

Il existe un besoin d'une solution de reconfiguration des dispositifs de terminaison de réseau bas coût qui soit de mise en oeuvre simple et qui ne nécessite pas d'interruption du service.

Selon un aspect, l'invention a pour objet un procédé de communication entre un dispositif de terminaison de ligne et au moins un dispositif de terminaison de réseau, le dispositif de terminaison de ligne étant relié par au moins une ligne à cet au moins un dispositif de terminaison de réseau, le procédé comprenant une étape de transmission, par le dispositif de terminaison de ligne, *via* ladite ligne, à destination d'au moins un du ou des dispositif(s) de terminaison de réseau, de trames comprenant des données de contenu. Le dispositif de terminaison de ligne transmet, à destination de l'un au moins ou des dispositif(s) de terminaison de réseau, des données de reconfiguration spécifiques à un protocole de communication à utiliser pour la transmission de ces trames, ces données de reconfiguration permettant une reconfiguration d'un modem dudit dispositif de terminaison de réseau destinataire.

Ainsi, le dispositif de terminaison de ligne est utilisé à la fois pour transmettre des données de contenu comprises dans des trames se conformant à un protocole de communication, et pour commander au moins en partie les éventuels changements de ce protocole de communication sur la ligne.

Ces modifications de protocole sont typiquement effectuées en reconfigurant au moins certains des dispositifs de terminaison de réseau. Les données de reconfiguration peuvent, par exemple, comprendre un fichier de reconfiguration destiné à reprogrammer au moins un composant de ces dispositifs de terminaison de réseau.

Par exemple, le composant reprogrammé peut comprendre un modem. Les modifications effectuées peuvent par exemple consister en la fourniture de nouveaux paramètres, ou encore en la fourniture d'un exécutable pour établir un nouveau protocole de communication sur la ligne. On peut aussi prévoir de configurer seulement certaines fonctionnalités du modem, par exemple la modulation.

Les données de reconfiguration sont ainsi aptes à reconfigurer un ou plusieurs dispositifs de terminaison de réseau, pour que ces dispositifs mettent en oeuvre un nouveau protocole de communication sur la ligne.

Par exemple, le protocole est défini par une couche logicielle des dispositifs de terminaison de ligne et de réseau, et la mise à jour du protocole comprend une modification de la couche logicielle de tout ou partie des dispositifs de terminaison de réseau.

Cette couche logicielle peut comprendre une couche de liaison de données gérant les communications entre équipements adjacents, ici entre le dispositif de terminaison de ligne et au moins un dispositif de terminaison de réseau.

En particulier, cette couche logicielle peut comprendre une couche MAC, de l'anglais « Medium Access Control ». Les données de reconfiguration peuvent permettre de modifier un format de couche MAC, par exemple un format défini dans l'un des standards 802.3, 802.x, avec x supérieur à 3, d'un ou plusieurs des dispositifs de terminaison de réseau.

Un tel procédé rend le remplacement des dispositifs de terminaison de réseau inutile, puisque ces derniers peuvent être mis à jour à l'initiative du dispositif de terminaison de ligne, dans la limite de leur compatibilité avec les performances requises. L'invention permet de faciliter les évolutions possibles du protocole de communication sur la ligne mis en oeuvre par les dispositifs de terminaison de réseau.

Les modifications de protocole envisagées sont compatibles avec les performances requises en ce sens qu'il est tenu compte des limites matérielles des équipements mis en oeuvre. Par exemple, la vitesse de modulation, la granularité de l'allocation d'intervalles de temps entre clients, etc. peuvent être limitées du fait de temps de montée et de descente non-nuls des composants des dispositifs de terminaison de ligne et/ou de réseau.

Ce procédé permet d'effectuer les basculements des dispositifs de terminaison de réseau vers un nouveau protocole de manière simultanée, évitant ainsi des possibles interférences rendant le lien inopérant dans le sens montant (des dispositifs de terminaison de réseau vers le dispositif de terminaison de ligne).

En outre, le dispositif de terminaison de ligne peut assurer l'interface avec un réseau de télécommunication du type Internet. Ce dispositif de terminaison de ligne a une connaissance en temps réel de la nature et de la version des dispositifs de terminaisons de réseau connectés ainsi que de l'état des communications sur la ligne partagée. La reconfiguration des dispositifs de terminaison de ligne pour changer le protocole de communication sur la ligne peut ainsi être effectuée sans risque de perturbations liées à un manque d'informations quant à l'état du trafic sur la ligne, comme cela pourrait être le cas si un dispositif distinct du dispositif de terminaison de ligne était prévu pour assurer cette reconfiguration.

En particulier, si le fournisseur de services et le fournisseur de réseau sont différents, il pourrait être relativement hasardeux de laisser des fournisseurs de services en situation de gestion concurrente de terminaisons de réseaux raccordées à un même support physique partagé, reconfigurer les dispositifs de terminaison de réseau via une plate-forme, dans la mesure où ces fournisseurs de services peuvent avoir une connaissance de l'état du réseau relativement lacunaire.

Enfin, avec le procédé de communication objet de l'invention, il est possible d'envisager des modifications du dispositif de terminaison de ligne, par exemple le remplacement, sans avoir à remplacer les dispositifs de terminaison de réseau correspondant.

Le procédé de communication objet de l'invention permet ainsi une mise à jour du protocole de communication sur la ligne, par exemple pour s'adapter à de nouvelles normes, relativement fiable, rapide et économique.

En outre, il est possible que l'utilisateur d'un dispositif de terminaison de réseau donné souhaite changer d'opérateur. Avec le procédé de communication objet de l'invention, ce changement d'opérateur peut également être géré par le dispositif de terminaison de ligne, évitant ainsi les inconvénients liés au remplacement du dispositif de terminaison de réseau.

Par « protocole de communication sur la ligne », on entend tout protocole régissant les communications entre équipements adjacents, par exemple les protocoles définis par une couche de liaison de données telle qu'une couche MAC.

Avantageusement, le dispositif de terminaison de ligne diffuse à l'un au moins des dispositifs de terminaison de réseau des données de gestion pour gérer une allocation d'une ressource partagée entre les dispositifs de terminaison de réseau, qui donne droit à l'une seule ou plusieurs d'entre elles d'utiliser une ressource selon que l'on choisisse un mode diffusé ou dédié. Ainsi, le dispositif de terminaison de ligne gère l'allocation de la ressource partagée entre les dispositifs de terminaison de réseau. Par « ressource partagée », on entend typiquement la bande passante de la ligne.

Par exemple, dans le cas de communications point multipoints sur un réseau passif, les données de gestion sont diffusées à tous les dispositifs de terminaison de réseau, mais on peut ajouter un critère que rend ces données de gestions lisibles à un groupe de dispositifs de terminaison de réseau seulement ou à un seul dispositif de terminaison de réseau.

Alternativement, c'est un tiers dispositif qui gère l'allocation de la ressource partagée, ou bien encore le mode de communication choisi assure une gestion correcte des ressources de la ligne. Par exemple, un mode de communication pair-à-pair ou P2P (de l'anglais « Peer To Peer ») est prévu. Dans ce cas, le procédé selon un aspect de l'invention permet des modifications de protocole pour passer vers un mode partagé, par exemple PMP.

Selon un autre aspect, l'invention a pour objet un dispositif de terminaison de ligne destiné à être relié par au moins une ligne à au moins un dispositif de terminaison de réseau, ce dispositif de terminaison de ligne étant agencé pour
transmettre via ladite ligne à destination d'un ou plusieurs dispositif(s) de terminaison de réseau des trames comprenant des données de contenu, et
des données de reconfiguration spécifiques à un protocole de communication à utiliser pour la transmission des dites trames et permettant une reconfiguration d'un modem dudit dispositif de terminaison de réseau destinataire.

Ce dispositif permet de mettre en oeuvre le procédé selon un autre aspect de l'invention.

Avantageusement, ce dispositif est agencé pour transmettre à l'un au moins des dispositifs de terminaison de réseau des données de gestion pour gérer une allocation d'une ressource partagée entre les dispositifs de terminaison de réseau.

Selon encore un autre aspect, l'invention a pour objet un procédé de communication entre un dispositif de terminaison de ligne et un dispositif de terminaison de réseau, ledit dispositif de terminaison de ligne étant relié par au moins une ligne à ce dispositif de terminaison de réseau, le procédé comprenant une étape de réception, par le dispositif de terminaison de réseau, *via* ladite ligne, en provenance du dispositif de terminaison de ligne, de trames comprenant des données de contenu. Le dispositif de terminaison de réseau reçoit, en provenance du dispositif de terminaison de ligne, des données de reconfiguration spécifiques à un protocole de communication à utiliser pour la transmission de ces trames et permettant une reconfiguration d'un modem dudit dispositif de terminaison de réseau.

Selon encore un autre aspect, l'invention a pour objet un dispositif de terminaison de réseau destiné à être relié par au moins une ligne à un dispositif de terminaison de ligne, le dispositif de terminaison de réseau étant agencé pour recevoir via ladite ligne des trames comprenant des données de contenu en provenance du dispositif de terminaison de réseau, et pour recevoir des données de reconfiguration en provenance du dispositif de terminaison de ligne, lesdites données de reconfiguration étant spécifiques à un protocole de communication à utiliser pour la transmission des dites trames et permettant une reconfiguration d'un modem dudit dispositif de terminaison de réseau.

Selon encore un autre aspect, l'invention a pour objet un programme d'ordinateur destiné à être stocké dans une mémoire d'un dispositif de terminaison de ligne destiné à être relié par au moins une ligne à au moins un dispositif de terminaison de réseau, et/ou stocké sur un support mémoire destiné à coopérer avec un lecteur dudit dispositif de terminaison de ligne et/ou téléchargé, le programme comprenant des instructions pour exécuter les étapes suivantes :
- transmettre via ladite ligne à destination d'au moins un desdits au moins un dispositif de terminaison de réseau des trames comprenant des données de contenu, et
   des données de reconfiguration spécifiques à un protocole de communication à utiliser pour la transmission des dites trames et permettant une reconfiguration d'un modem dudit dispositif de terminaison de réseau destinataire.

Selon un autre aspect, l'invention a pour objet un programme d'ordinateur destiné à être stocké dans une mémoire d'un dispositif de terminaison de réseau destiné à être relié par au moins une ligne à un dispositif de terminaison de ligne, et/ou stocké sur un support mémoire destiné à coopérer avec un lecteur dudit dispositif de terminaison de réseau et/ou téléchargé, le programme comprenant des instructions pour exécuter les étapes suivantes,
- recevoir via ladite ligne des trames comprenant des données de contenu en provenance du dispositif de terminaison de réseau,
- recevoir des données de reconfiguration en provenance du dispositif de terminaison de ligne, lesdites données de reconfiguration étant spécifiques à un protocole de communication à utiliser pour la transmission des dites trames et permettant une reconfiguration d'un modem dudit dispositif de terminaison de réseau.

L'invention n'est pas limitée par le type des données de reconfiguration. Il peut par exemple s'agir de fichier de programmation d'un composant du dispositif de terminaison de réseau, par exemple un contrôleur, un DSP (de l'anglais « Digital Signal Processor » ou processeur de signaux numériques), un circuit logique programmable par exemple un FPGA (de l'anglais « Field Programmable Gate Array »). Les données de reconfiguration peuvent comprendre une netlist (c'est-à-dire un fichier contenant une description d'éléments de conception schématiques et leurs interconnections), des instructions de plus ou moins haut niveau, des instructions non compilées, par exemple si le dispositif de terminaison de réseau comprend un compilateur, des instructions en assembleur etc.

La ligne partagée peut par exemple être une ligne physique, par exemple une ligne optique et/ou cuivre. L'invention peut aussi être mise en oeuvre dans la cadre de transmissions optiques en espace libre (canons laser) voire radio utilisant le domaine temporel comme mode de partage des ressources (Wifi ou Wimax).

Le dispositif de terminaison de ligne peut par exemple comprendre un dispositif OLT (de l'anglais « Optical Line Termination »), un dispositif ACS (de l'anglais « Auto Configuration Server » ou serveur d'autoconfiguration), ou un dispositif MSAN (de l'anglais « Multi Service Access Node » ou Noeud d'accès multi-services ).

Les dispositifs de terminaison de réseau peuvent par exemple comprendre des dispositifs MC (de l'anglais « Média Converter » ou convertisseur de media), des dispositifs de type xTU-R (de l'anglais « Remote Copper Termination Unit » ou Terminaison de réseau cuivre distant), des dispositifs ONU (de l'anglais « Optical Network Unit »), des dispositifs ONT (de l'anglais « Optical Line Terminal » ou Terminal de ligne optique), etc.

Un dispositif de terminaison de réseau peut intégrer, en plus d'un dispositif remplissant une fonction de modem, un dispositif de type passerelle résidentielle remplissant une fonction de routeur. Dans ce cas, c'est un même dispositif qui gère l'échange de données avec un réseau d'accès, dont les modifications sont tributaires des décisions du régulateur, de la concurrence et des règles comptables du secteur privé, et avec un réseau domestique, qui lui se trouve sous le seul contrôle de l'utilisateur final. L'invention permet d'éviter de remplacer ce dispositif commun, et donc des perturbations au sein du réseau domestique qui seraient liées à ce remplacement.

Alternativement, un dispositif de type passerelle résidentielle peut être prévu en aval (dans le sens descendant, c'est-à-dire dans le sens du dispositif de terminaison de ligne vers un au moins dispositif de terminaison de réseau) du dispositif de terminaison de réseau vers l'installation client. Par exemple, le dispositif de terminaison de réseau comprend un dispositif du type ONU faisant fonction de modem optique collectif de pied d'immeuble. Ce dispositif ONU est raccordé par des liaisons cuivre à plusieurs équipements utilisateurs du type CPE (de l'anglais « Costumer Premises Equipment ») qui constituent un autre dispositif de terminaison de réseau, dédié à chaque client.

On peut aussi ne prévoir aucun dispositif de type passerelle résidentielle. De manière générale, l'invention permet de préserver la continuité de réseau d'accès, de l'installation domestique et des services, et n'est pas limitée par le type de l'installation en bout de ligne.

L'invention n'est pas limitée par la nature du trafic supporté. On peut par exemple prévoir une transmission bi-fibres, un mode semi-duplex, un mode full-duplex. On peut aussi prévoir, comme décrit dans la demande EP1126639., de laisser les dispositifs de terminaison de ligne et de réseau convenir entre eux de la nature du trafic à supporter sur la ligne.

L'invention n'est pas non plus limitée par la façon dont l'allocation de la ressource partagée entre les dispositifs de terminaison de réseau est gérée. On peut par exemple prévoir un multiplexage en fréquence, un multiplexage temporel, ou bien encore une technologie de gestion des collisions du type CSMA/CD (de l'anglais « Carrier Sense Multiple Access with Collision Detection »).

On peut prévoir de mettre en oeuvre des trames multidébits telles que décrites dans la demande EP0643505, permettant ainsi d'adapter en fonction du débit réellement utile les performances requises. L'invention permet ainsi de modifier la couche MAC d'un dispositif de terminaison de réseau existante pour mettre en oeuvre ces trames multi vitesses.

Dans le cas d'un multiplexage temporel, un format TDMA (de l'anglais « Time Division Multiple Access ») peut être mis en oeuvre. Le dispositif de terminaison de ligne peut assurer la gestion de l'allocation de la ressource partagée en envoyant des autorisations d'émettre dans le sens montant, c'est-à-dire d'un dispositif de terminaison de réseau vers le dispositif de terminaison de ligne, pendant un intervalle de temps donné. Les données de gestion transmises par le dispositif de terminaison de ligne peuvent comprendre des données de synchronisation. Ces données de synchronisation peuvent faire partie d'un champ déterminé des trames émises par le dispositif de terminaison de ligne, ou bien être transmises dans des trames dédiées à la gestion de l'allocation de la ressource partagée.

Dans le cas d'une gestion des collisions du type CSMA/CD, on peut prévoir des paquets dédiés à la transmission des données de gestion. Alternativement, les données de gestion sont transmises dans un champ de gestion présent dans les trames émises par la terminaison de ligne.

Ainsi, selon un autre aspect, l'invention a pour objet une trame destinée à être transmise entre un dispositif de terminaison de ligne et au moins un dispositif de terminaison de réseau, ledit dispositif de terminaison de ligne étant relié par au moins une ligne audit au moins un dispositif de terminaison de réseau. Cette trame comporte des données de reconfiguration spécifiques à un protocole de communication à utiliser pour la transmission de trames entre ledit dispositif de terminaison de ligne et ledit au moins un dispositif de terminaison de réseau, ces données de reconfiguration permettant une reconfiguration d'un modem dudit dispositif de terminaison de réseau.

Une telle trame peut être émise par un dispositif de terminaison de ligne selon un aspect de l'invention.

Avantageusement, la trame selon comprend un champ de contenu destiné à transporter des données de contenu provenant d'un réseau de télécommunications connecté audit dispositif de terminaison de ligne, et un champ de reconfiguration apte à transporter des données de reconfiguration aptes à modifier ledit protocole.

Avantageusement, la trame comprend en outre un champ de gestion apte à transporter des données de gestion aptes à gérer une allocation d'une ressource partagée entre les dispositifs de terminaison de réseau.

De manière générale, un procédé de communication sur un réseau arborescent est mis en oeuvre. Un dispositif de terminaison de ligne assure l'interface entre au moins un dispositif de terminaison de réseau et un réseau de télécommunications. Des trames comprenant des données de contenu sont ainsi émises sur une ligne entre les dispositifs de terminaison de ligne et de réseau, ces trames se conformant à un protocole de communication déterminé. Pour une mise à jour du protocole, le dispositif de terminaison de ligne transmet à au moins un dispositif de terminaison de réseau des données de reconfiguration aptes à modifier ce protocole.

Le transport de ces données de reconfiguration peut mettre en oeuvre un canal de reconfiguration distinct d'un canal de transmission dédié au transport des données de contenu. Par exemple, le canal de reconfiguration peut utiliser une fréquence porteuse de référence dédiée, si le multiplexage est effectué en fréquence. Le canal de reconfiguration peut aussi utiliser une longueur d'ondes optique, par exemple, un en-tête par longueur d'onde. Alternativement si la reconfiguration est voulue transverse à plusieurs technologies de multiplexage, les données de reconfiguration seront diffusées de manière synchronisée sur chaque fréquence électrique ou longueur d'onde.

Le canal de reconfiguration peut être formaté en cellules ATM, paquets Ethernet, IP ou MPLS, etc. repérables par le dispositif de terminaison de réseau, de manière implicite par son emplacement dans une tramage MRT ou TDM ou de manière explicite par la reconnaissance d'une adresse dédiée, qui doit être un invariant ou une option prédéterminée détectable par la terminaison de réseau, ce qui est indispensable en particulier pour les dispositifs de terminaison de réseau restés sur un format de couche MAC antérieur.

On peut prévoir que le canal de reconfiguration, dit également méta-canal, soit mis en oeuvre seulement dans les communications sur la ligne partagée, entre les dispositifs de terminaison de ligne et de réseau.

On peut aussi prévoir que circulent sur la ligne (entre les dispositifs de terminaison de ligne et de réseau) des trames comprenant un champ d'en-tête indiquant si la trame transporte des données de contenu, de gestion et/ou de reconfiguration.

Par « trame » on entend la découpe temporelle de la ressource. Une telle découpe est périodique et constitue un motif de tramage. Une telle trame constitue une référence temporelle permettant de recaler des terminaisons situées à des distances différentes. Cette trame renferme des données de contenu et des informations de service, généralement situées dans une zone d'en-tête de la trame. Selon le contexte, une trame peut être constituée de paquet de données, de datagramme, de bloc de données, ou autre expression de ce type.

Les trames émises par le dispositif de terminaison de ligne peuvent comprendre un champ de contenu, un champ de gestion et/ou un champ de reconfiguration.

D'autres particularités et avantages de la présente invention apparaîtront dans la description ci-après.
La figure 1 montre un exemple de réseau arborescent connu de l'art antérieur.
La figure 2 montre très schématiquement une trame descendante selon un mode de réalisation de l'invention.
La figure 3 montre très schématiquement une trame montante selon un mode de réalisation de l'invention.
La figure 4 est un organigramme d'un exemple d'algorithme exécutable par un dispositif selon un mode de réalisation de l'invention.

Les modes de réalisation représentés concernent une solution de contrôle de modifications de la couche MAC de dispositifs de terminaison de réseau se partageant une ligne arborescente, par exemple une fibre optique.

Ces dispositifs de terminaison de réseau ou NTs (de l'anglais « network terminations ») sont reliées à un réseau de télécommunication par l'intermédiaire d'un dispositif de terminaison de ligne ou LT (de l'anglais « line terminal ») situé en bout de ligne.

Le dispositif de terminaison de ligne émet à destination des dispositifs de terminaison de réseau des trames comportant dans leur entête un champ dit méta-canal ou canal de reconfiguration. Un tel méta-canal est prévu pour contrôler les modifications de la couche MAC des dispositifs de terminaison de réseau.

Le méta-canal permet des évolutions du protocole de communication entre le LT et les NTs, c'est-à-dire par exemple de la fréquence d'horloge, le codage en ligne, l'embrouillage, le cryptage des données ainsi que la façon dont la bande passante de la ligne est partagée entre les NTs, le format des données échangées, le mode de communication, etc., dans la mesure des limites matérielles des NTs, du LT et de la ligne, et dans la mesure où le traitement du champ méta-canal des trames reçues est possible.

Le partage de la bande passante de la ligne peut être effectué par multiplexage temporel, suivant un format TDMA par exemple. Le méta-canal peut alors comporter un en-tête, dit en-tête de reconfiguration, présent dans chaque trame descendante, c'est-à-dire diffusé par la LT vers un ou plusieurs NTs autorisés à l'exploiter. Cet en-tête de reconfiguration est avantageusement accolé à un champ de synchronisation temporelle, lui aussi compris dans l'entête de la trame, de manière à être repérable dès la synchronisation par les NTs.

Le méta canal est constitué de deux champs: l'en-tête de reconfiguration et un champ contenant les données de reconfiguration. Le champ d'en-tête du méta canal gère les échanges entre LT et NTs. Ce champ est complété de données lors du téléchargement d'une nouvelle configuration.

L'entête de la trame comprend également un champ appelé PLOAM variable quant à sa nature et assurant la gestion de la couche MAC. Le champ PLOAM suit immédiatement le méta canal dans l'entête de la trame, il contient la déclaration explicite de la découpe de trame, et du mode d'exploitation des données, ce qui offre une grande souplesse d'utilisation. Selon un autre exemple, décrit ci-dessous en référence à la figure 2, le champ contenant les données de reconfiguration contient un fichier de configuration, par exemple une netlist, ou un fichier de programmation d'un composant programmable, ou du code pour un DSP. Le type de ce fichier de configuration est au préalable établi par le constructeur du NT en fonction des spécifications de l'opérateur. On peut prévoir de laisser la possibilité au constructeur de choisir parmi plusieurs types de fichiers de configuration, par exemple netlist ou exécutable, la LT transmettant alors éventuellement plusieurs types de fichiers de configuration selon les NTs présentes sur le réseau.

La figure 2 illustre une structure de trame descendante selon un mode de réalisation de l'invention. Cette trame 20 est composée d'un en-tête de trame 21 et d'un champ 22 dédié au transfert de données de contenu.

Ce champ 22 peut être découpé de manière flexible en intervalles de temps égalitaires, en unités d'informations du type octets, cellules, paquets etc.

L'en-tête de trame 21 comprend un champ de récupération d'horloge binaire et de rythme de trame 23, ou MVT, pour Mot de Verrouillage de Trame, qui sert d'information de synchronisation des NTs, et d'un champ dit canal de reconfiguration, ou méta-canal 24, dont le contenu est compréhensible pour tout équipement ayant récupéré le rythme et la synchronisation de la trame.

L'en-tête de trame 21 comprend en outre un champ HKC, de l'anglais « House Keeping Channel » dédié à une couche MAC unique, comprenant des données de gestion de l'allocation de la ressource partagée. Ce champ HKC 25 dépend de la technologie de format.de transmission employée. A ce titre, la structure et le débit de ce champ 25 sont susceptibles de changer lors d'un changement de technique de transmission. Le champ 25 inclut classiquement des informations de gestion de trame de niveau couche physique (PLOAM, de l'anglais « physical layer opérations administration and maintenance ») à relativement forte contrainte temps réel, dont la gestion d'allocation de temps de parole par NT dans la cadre d'un format TDMA.

Le méta-canal 24 comprend principalement deux champs : un en-tête de reconfiguration 26 permettant la gestion des échanges de configuration entre la LT, par exemple une OLT, et une pluralité de NTs, et un champ de téléchargement de configuration 27 pour transporter les fichiers de configuration eux-mêmes.

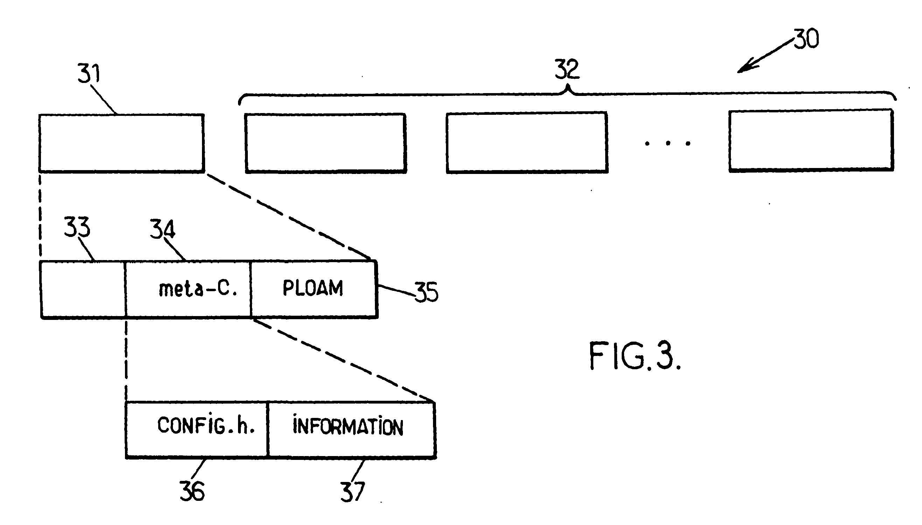

Pour le sens remontant, on peut établir un canal de reconfiguration remontant (référence 34 sur la figure 3), permettant d'acquitter et de répondre aux demandes du canal de reconfiguration descendant 24 (rapatriement des informations nécessaires au processus), et de vérifier la bonne prise en compte de demandes de basculement, cela y compris à la mise en service d'une nouvelle terminaison de réseau auquel cas aucun trafic utile remontant de cette terminaison n'est présent. Dans le cadre d'un équipement déjà en fonctionnement, on peut se contenter d'utiliser une ressource établie et d'être conforme au format courant, par exemple par utilisation du canal PLOAM. On peut aussi prévoir un canal de reconfiguration remontant spécifique par défaut.

La taille du champ de téléchargement de configuration 27 peut résulter d'un compromis entre bande passante consommée en permanence par la trame et le temps de téléchargement par NT.

Optionnellement, il est possible de n'ouvrir le champ de téléchargement de configuration 27 que lors d'une phase de mise à niveau. Dans ce cas, à chaque trame, tous les NTs doivent détecter la présence d'un drapeau indiquant la présence du décalage (offset) à appliquer sur l'en-tête de trame pour une analyse correcte, à savoir passer au champ HKC.

En effet, les modifications du format de couche MAC sont sporadiques et peuvent arriver un nombre de fois relativement faible, par exemple 2 ou 3 fois dans la vie des NTs. Le téléchargement se produit en temps masqué vu du client, et peut donc s'étendre sur un laps de temps relativement important, pourvu que l'on ne rentre pas en collision avec la disponibilité du lien (au sens support physique) interdisant tout téléchargement ou basculement synchronisé, par exemple un timer arrivant à échéance ou une mise en veille intempestive de la NT (pour des raisons d'économie d'énergie par exemple).

L'en-tête de reconfiguration 26 (descendant) permet d'adresser individuellement et/ou collectivement les NTs ou dispositifs de terminaison réseau distantes, d'interroger les NTs quant à leurs versions matérielles, logicielles et/ou micrologicielles (« firmware »), afin de déterminer quel fichier de configuration envoyer, pour implémenter un nouveau format de trame. La LT peut interroger les NTs quant à leurs caractéristiques matérielles pour recenser les NTs capables de supporter le changement de format de couche MAC. La LT peut aussi vérifier les versions de format de couche MAC courantes avant le téléchargement des fichiers de configuration. Après le téléchargement, la LT peut vérifier l'intégralité des configurations téléchargées en attente de basculement. Les réponses à ces interrogations peuvent mettre en jeu des structures de trames montantes telles que décrites plus loin, en référence à la figure 3.

L'en-tête 26 permet en outre d'ordonner un basculement collectif ou individuel vers le nouveau format de couche MAC. Si tous les NTs d'un groupe donné sont présentes lors du téléchargement, on peut prévoir un basculement collectif. Dans le cas d'un nouvel équipement NT compatible, mais non mis à jour, le basculement sera individuel après mise à jour de son mode de fonctionnement. Ce nouvel équipement démarre dans un état où seul un champ dans la trame remontante de réponse l'entête 26 est disponible.

En cas de problème, il peut être possible de retourner à la configuration précédente. L'en-tête 26 permet l'ordre de restauration du format de couche MAC précédent en cas de problème post-basculement, et donc une gestion de configuration sur au moins deux formats de couche MAC consécutifs.

Le champ de téléchargement de configuration 27 permet un téléchargement du fichier de configuration en mode message. Ce champ 27 peut servir à spécifier en outre un identifiant du ou des NTs destinataires. Le champ 27 peut comprendre des bits de repérage permettant de repérer le début et la fin de téléchargement de fichier. Le champ 27 peut comprendre des bits de somme de contrôle (« checksum ») permettant d'assurer que l'intégralité du fichier a été reçu, que l'ordre de transmission du fichier a été respecté et que le contenu du fichier a bien été récupéré sans erreur.

Le canal de reconfiguration est conçu de manière à minimiser son impact sur la trame remontante, ce qui peut se faire par l'utilisation d'une portion de trame remontante existante dans la structure de trame remontante en vigueur (PLOAM du protocole courant). Alternativement, on définit au niveau de la LT, et non à la seule initiative d'un format de transmission unitaire, un canal remontant englobant la fonction de jalonnement (« ranging ») temporel pour les terminaisons en cours d'initialisation. Cette définition peut être mise en oeuvre dans le cadre d'une ligne partagée PON TDMA, en particulier si on vise la généricité avec prise en compte de NT pas encore mis en service, ou le choix d'absence de mise à jour de NT avant le raccordement à un PON.

Le canal de reconfiguration de la trame remontante est reconnaissable et permet la fonction d'enregistrement détaillé des appels ou CDR, de l'anglais « Clock and Data Recovery » (régénération de la donnée et reconnaissance de la nature du message). Le canal de reconfiguration de la trame remontante véhicule également l'acquittement d'une bonne réception d'un fichier de configuration. Optionnellement, le canal de reconfiguration de la trame remontante comporte un identifiant de la NT, même si cet identifiant est implicite dans le cas d'un adressage nominatif de la requête descendante. Le canal de reconfiguration de la trame remontante peut porter des réponses aux messages de questionnement du champ d'en-tête de reconfiguration 26 de la trame descendante. Par exemple le canal de reconfiguration de la trame remontante comporte un champ paramètre permettant l'envoi séquentiellement d'un numéro de série d'équipement, d'une version matérielle (« hardware ») de la section transmission et d'une version logicielle.

La figure 3 illustre un exemple de structure de trame remontante selon un mode de réalisation de l'invention. La trame remontante 30 comprend un en-tête de trame remontante 31 et un champ 32 contenant de la charge utile. Ce champ 32 peut être découpé de manière flexible en intervalles de temps variables, alloués dynamiquement selon les besoins des NTs, comme décrit dans la demande EP0643505. La granularité des unités d'informations (octets, cellules, paquets) peut également varier. Dans cet exemple, le champ 32 est composé de paquets.

L'en-tête de trame remontante 31 comprend un champ 33 dit « overhead », ce champ 33 comportant un motif minimal fixé par la LT permettant de récupérer un niveau d'amplitude (fonction des performances de l'électronique à contrôle automatique de gain ou CAG, ou d'un circuit TIA, de l'anglais « transimpedance amplifier) pour le seuil d'un comparateur de régénération et la récupération de la phase d'horloge d'échantillonnage permettant la régénération.

L'en-tête 31 comporte en outre un canal de reconfiguration remontant 34, ou méta-canal remontant, dédié à la gestion des modifications du format de couche MAC des NTs.

Avantageusement, l'en-tête 31 comprend en outre un champ PLOAM 35 pour la gestion de l'allocation de la bande-passante.

L'en-tête 31 est envoyé par la NT immédiatement après décodage dans la trame descendante de l'identifiant de NT, et avec la réponse requise après la requête du canal de reconfiguration descendant.

EN AMRT, lors d'un échange avec une NT non répertoriée, la LT prend soin d'aménager un espace libre de réponse dans la trame remontante afin d'éviter tout risque de collision. Si la NT est déjà répertoriée, la distance entre la LT et le NT étant connue, cette fenêtre d'incertitude peut être réduite aux dérives estimées entre deux cycles de recalcul de la distance.

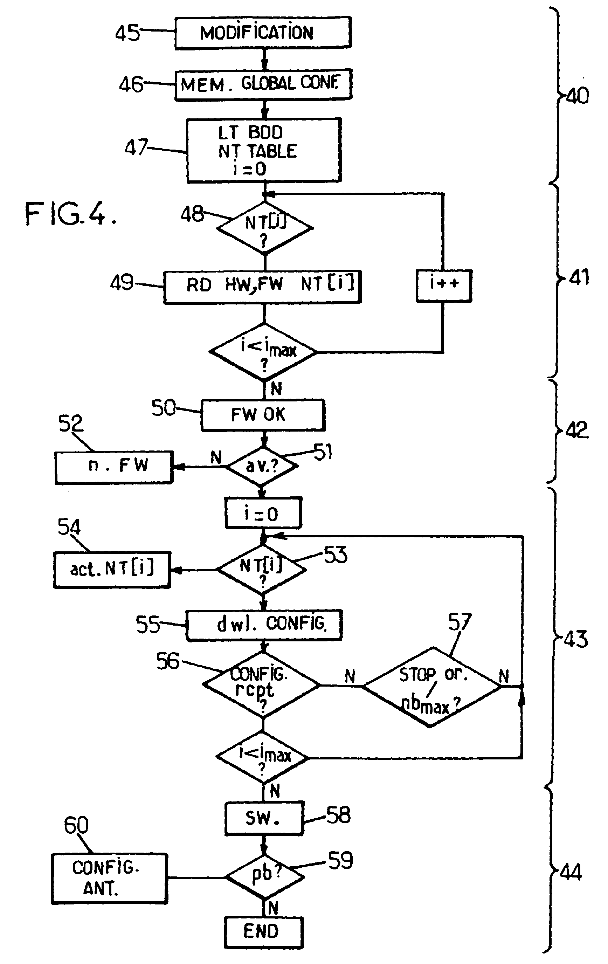

La figure 4 illustre un exemple d'algorithme de modification du format de couche MAC de NTs, cet algorithme étant exécutable par un LT.

Dans une phase d'initialisation 40, la LT reçoit lors d'une étape 45 un ordre de modification du format de couche MAC. Lors d'une étape 46, la configuration globale est mémorisée à des fins de sauvegarde (« backup ») en cas d'échec. Puis lors d'une étape 47, certaines caractéristiques de la LT sont chargées, et une table des NTs partageant la ligne de la LT est dressée. Les NTs sont indicés i, i variant entre 0 et i_{MAX-} L'indice i vaut initialement 0.

Suit une phase 41 d'identification des micrologiciels (« firmware ») nécessaires, cette phase mettant en jeu une boucle sur les indices i. On teste lors d'une étape 48 si la i^{éme} NT est présente. Si tel est le cas, la LT interroge cette NT quant à sa version matérielle et micrologicielle lors d'une étape 49.

Dans une phase 42 de collecte des micrologiciels nécessaires, on recherche lors d'une étape 50 tous les micrologiciels correspondants à la configuration souhaitée. On teste lors d'une étape 51 si ces micrologiciels sont disponibles, et le cas échéant on développe lors d'une étape 52 un nouveau micrologiciel. On peut alternativement désinvestir le ou les NTs correspondants à des micrologiciels non disponibles.

Dans une phase 43 de téléchargement des micrologiciels, une boucle indicée par i est mise en oeuvre pour balayer les NTs les unes après les autres. On teste lors d'une étape 53 si la i^{ème} NT est présente, et le cas échant, on active cette NT lors d'une étape 54. Si la i^{ème} NT est bien présente, on peut procéder au téléchargement lors d'une étape 55, par exemple en utilisant un ou plusieurs champs de téléchargement de configuration tels que décrits plus haut en référence à la figure 2. Lors d'une étape 56, on teste si la configuration a bien été reçue, par exemple en utilisant une ou des trames remontantes telles que décrites en référence à la figure 3. Si ce n'est pas le cas, on examine lors d'une étape 57 si un ordre d'arrêt a été émis ou si le nombre d'essais a dépassé un seuil.

Enfin, dans une phase 44 de basculement, la LT émet lors d'une étape 58 un ordre de basculement de format de couche MAC. Si un problème est détecté lors d'une étape de test 59, la LT ordonne un retour à la configuration antérieure lors d'une étape 60.

## Revendications

1. Procédé de communication entre un dispositif de terminaison de ligne et au moins un dispositif de terminaison de réseau, ledit dispositif de terminaison de ligne étant relié par au moins une ligne audit au moins un dispositif de terminaison de réseau, le procédé comprenant une étape de transmission, par le dispositif de terminaison de ligne, *via* ladite ligne, à destination d'au moins un desdits au moins un dispositif de terminaison de réseau, de trames comprenant des données de contenu (22), procédé dans lequel
lesdites trames transmises par le dispositif de terminaison de ligne à l'un au moins des dispositifs de terminaisons de réseau comprennent :
- un champ de contenu (22) destiné à transporter les données de contenu provenant du réseau de télécommunications, ledit procédé étant **caractérisé en ce que** lesdites trames comportent
- un champ de reconfiguration (24) apte à transporter des données de reconfiguration (24) spécifiques à un protocole de communication à utiliser pour la transmission desdites trames,
lesdites données de reconfiguration étant adaptées pour permettre une reconfiguration d'un modem dudit dispositif de terminaison de réseau destinataire.

2. Procédé de communication entre un dispositif de terminaison de ligne et un dispositif de terminaison de réseau, ledit dispositif de terminaison de ligne étant relié par au moins une ligne audit dispositif de terminaison de réseau, le procédé comprenant une étape de réception, par le dispositif de terminaison de réseau, *via* ladite ligne, en provenance du dispositif de terminaison de ligne, de trames comprenant des données de contenu (22), procédé dans lequel
lesdites trames reçues par le dispositif de terminaison de réseau comprennent :
un champ de contenu (22) destiné à transporter les données de contenu provenant du réseau de télécommunications, ledit procédé étant **caractérisé en ce que** lesdites trames comportent
- un champ de reconfiguration (24) apte à transporter des données de reconfiguration (24) spécifiques à un protocole de communication à utiliser pour la transmission desdites trames,
lesdites données de reconfiguration étant adaptées pour permettre une reconfiguration d'un modem dudit dispositif de terminaison de réseau destinataire.

3. Procédé selon les revendications 1 ou 2, dans lequel le champ de reconfiguration (24) est compris dans un champ d'en-tête (21) de la trame.

4. Procédé selon l'une des revendications 1 à 3, dans lequel
le champ de reconfiguration (24) comprend un champ de téléchargement de configuration (27) pour transporter les données de reconfiguration et un champ d'en-tête de reconfiguration (26) pour gérer les échanges de reconfiguration entre le dispositif de terminaison de ligne et ledit au moins un dispositif de terminaison de réseau.

5. Trame (20) destinée à être transmise entre un dispositif de terminaison de ligne et au moins un dispositif de terminaison de réseau, ledit dispositif de terminaison de ligne étant relié par au moins une ligne audit au moins un dispositif de terminaison de réseau,
ladite trame étant **caractériséees en ce qu'**elle comporte des données de reconfiguration (24) spécifiques à un protocole de communication à utiliser pour la transmission de trames entre ledit dispositif de terminaison de ligne et ledit au moins un dispositif de terminaison de réseau,
et en ce que lesdites données de reconfiguration sont adaptées pour permettre une reconfiguration d'un modem dudit dispositif de terminaison de réseau.

6. Trame selon la revendication précédente comprenant un champ de contenu (22) destiné à transporter des données de contenu provenant d'un réseau de télécommunications connecté audit dispositif de terminaison de ligne, et
un champ de reconfiguration (24) apte à transporter des données de reconfiguration aptes à modifier ledit protocole.

7. Dispositif de terminaison de ligne destiné à être relié par au moins une ligne à au moins un dispositif de terminaison de réseau,
ledit dispositif de terminaison de ligne étant agencé pour
transmettre via ladite ligne à destination d'au moins un desdits au moins un dispositif de terminaison de réseau des trames comprenant des données de contenu,
ledit dispositif étant **caractérise en ce que** il est agencé pour que lesdites trames comportent
des données de reconfiguration spécifiques à un protocole de communication à utiliser pour la transmission des dites trames, lesdites données de reconfiguration étant adaptées pour permettre une reconfiguration d'un modem dudit dispositif de terminaison de réseau destinataire.

8. Dispositif de terminaison de réseau destiné à être relié par au moins une ligne à un dispositif de terminaison de ligne, le dispositif de terminaison de réseau étant agencé pour recevoir via ladite ligne des trames comprenant des données de contenu en provenance du dispositif de terminaison de ligne,
ledit dispositif étant **caractérise en ce que** il est agencé pour que lesdites trames comportent
des données de reconfiguration en provenance du dispositif de terminaison de ligne, lesdites données de reconfiguration étant spécifiques à un protocole de communication à utiliser pour la transmission des dites trame,
lesdites données de reconfiguration étant adaptées pour permettre une reconfiguration d'un modem dudit dispositif de terminaison de réseau.

9. Programme d'ordinateur destiné à être stocké dans une mémoire d'un dispositif de terminaison de ligne destiné à être relié par au moins une ligne à au moins un dispositif de terminaison de réseau, et/ou stocké sur un support mémoire destiné à coopérer avec un lecteur dudit dispositif de terminaison de ligne et/ou téléchargé, le programme comprenant des instructions pour exécuter les étapes suivantes,
transmettre via ladite ligne à destination d'au moins un desdits au moins un dispositif de terminaison de réseau des trames comprenant des données de contenu, et
des données de reconfiguration spécifiques à un protocole de communication à utiliser pour la transmission des dites trames, lesdites données de reconfiguration étant adaptées pour permettre une reconfiguration d'un modem dudit dispositif de terminaison de réseau destinataire.

10. Programme d'ordinateur destiné à être stocké dans une mémoire d'un dispositif de terminaison de réseau destiné à être relié par au moins une ligne à un dispositif de terminaison de ligne, et/ou stocké sur un support mémoire destiné à coopérer avec un lecteur dudit dispositif de terminaison de réseau et/ou téléchargé, le programme comprenant des instructions pour exécuter les étapes suivantes,
recevoir via ladite ligne des trames comprenant des données de contenu en provenance du dispositif de terminaison de ligne,
et des données de reconfiguration en provenance du dispositif de terminaison de ligne, lesdites données de reconfiguration étant spécifiques à un protocole de communication à utiliser pour la transmission des dites trames lesdites données de reconfiguration étant adaptées pour permettre une reconfiguration d'un modem dudit dispositif de terminaison de réseau.

## Claims

1. Method of communication between a line-termination device and at least one network-termination device, said line-termination device being connected by at least one line to said at least one network-termination device, the method comprising a step of transmission, by the line-termination device, via said line, to at least one of said at least one network-termination device, of frames comprising content data (22),
in which method said frames transmitted by the line-termination device to at least one of said network-termination devices comprise:
- a content field (22) designed to transfer the content data originating from the telecommunications network,
said method being **characterized in that** said frames comprise:
- a reconfiguration field (24) capable of transferring reconfiguration data (24) specific to a communication protocol to be used for the transmission of said frames,
said reconfiguration data being adapted to allow a reconfiguration of a modem of said destination network-termination device.

2. Method of communication between a line-termination device and a network-termination device, said line-termination device being connected by at least one line to said network-termination device, the method comprising a step of reception, by the network-termination device, via said line, originating from the line-termination device, of frames comprising content data (22),
in which method said frames received by the network-termination device comprise:
- a content field (22) designed to transfer the content data originating from the telecommunications network,
said method being **characterized in that** said frames comprise:
- a reconfiguration field (24) capable of transferring reconfiguration data (24) specific to a communication protocol to be used for the transmission of said frames,
said reconfiguration data being adapted to allow a reconfiguration of a modem of said destination network-termination device.

3. Method according to Claims 1 or 2, wherein the reconfiguration field (24) is included in a header field (21) of the frame.

4. Method according to one of Claims 1 to 3, wherein the reconfiguration field (24) comprises a configuration download field (27) for transferring the reconfiguration data and a reconfiguration header field (26) for managing the reconfiguration interchanges between the line-termination device and said at least one network-termination device.

5. Frame (20) designed to be transmitted between a line-termination device and at least one network-termination device, said line-termination device being connected by at least one line to said at least one network-termination device, said frame being **characterized in that** it comprises reconfiguration data (24) specific to a communication protocol to be used for the transmission of frames between said line-termination device and said at least one network-termination device, and **in that** said reconfiguration data are adapted to allow a reconfiguration of a modem of said network-termination device.

6. Frame according to the preceding claim, comprising a content field (22) designed to transfer content data originating from a telecommunications network connected to said line-termination device, and a reconfiguration field (24) capable of transferring reconfiguration data capable of modifying said protocol.

7. Line-termination device designed to be connected by at least one line to at least one network-termination device, said line-termination device being arranged to transmit, via said line to at least one of said at least one network-termination device, frames comprising content data, said device being **characterized in that** it is arranged so that said frames comprise reconfiguration data specific to a communication protocol to be used for the transmission of said frames, said configuration data being adapted to allow a reconfiguration of a modem of said destination network-termination device.

8. Network-termination device designed to be connected by at least one line to a line-termination device, the network-termination device being arranged to receive, via said line, frames comprising content data originating from the line-termination device, said device being **characterized in that** it is arranged so that said frames comprise reconfiguration data originating from the line-termination device, said reconfiguration data being specific to a communication protocol to be used for the transmission of said frames, said configuration data being adapted to allow a reconfiguration of a modem of said network-termination device.

9. Computer program designed to be stored in a memory of a line-termination device designed to be connected by at least one line to at least one network-termination device, and/or stored on a memory medium designed to interact with a drive of said line-termination device and/or downloaded, the program comprising instructions for executing the following steps:
transmitting, via said line to at least one of said at least one network-termination device, frames comprising content data, and
reconfiguration data specific to a communication protocol to be used for the transmission of said frames, said reconfiguration data being adapted to allow a reconfiguration of a modem of said destination network-termination device.

10. Computer program designed to be stored in a memory of a network-termination device designed to be connected by at least one line to a line-termination device, and/or stored on a memory medium designed to interact with a drive of said network-termination device and/or downloaded, the program comprising instructions for executing the following steps,
receiving, via said line, frames comprising content data originating from the line-termination device,
and reconfiguration data, originating from the line-termination device, said reconfiguration data being specific to a communication protocol to be used for the transmission of said frames, said configuration data being adapted to allow a reconfiguration of a modem of said network-termination device.

## Patentansprüche

1. Verfahren zur Kommunikation zwischen einer Leitungsabschlussvorrichtung und mindestens einer Netzabschlussvorrichtung, wobei die Leitungsabschlussvorrichtung über mindestens eine Leitung mit der mindestens einen Netzabschlussvorrichtung verbunden ist, wobei das Verfahren einen Schritt der Übertragung von Inhaltsdaten (22) enthaltenden Rahmen durch die Leitungsabschlussvorrichtung über die Leitung an mindestens eine der mindestens einen Netzabschlussvorrichtungen enthält,
Verfahren, bei dem die von der Leitungsabschlussvorrichtung an mindestens eine der Netzabschlussvorrichtungen übertragenen Rahmen enthalten:
- ein Inhaltsfeld (22), das dazu bestimmt ist, die vom Telekommunikationsnetz kommenden Inhaltsdaten zu transportieren,
wobei das Verfahren **dadurch gekennzeichnet ist, dass** die Rahmen aufweisen:
- ein Rekonfigurationsfeld (24), das fähig ist, Rekonfigurationsdaten (24) zu transportieren, die für ein zur Übertragung der Rahmen zu verwendendes Kommunikationsprotokoll spezifisch sind,
wobei die Rekonfigurationsdaten geeignet sind, um eine Rekonfiguration eines Modems der Empfangs-Netzabschlussvorrichtung zu erlauben.

2. Verfahren zur Kommunikation zwischen einer Leitungsabschlussvorrichtung und einer Netzabschlussvorrichtung, wobei die Leitungsabschlussvorrichtung über mindestens eine Leitung mit der Netzabschlussvorrichtung verbunden ist, wobei das Verfahren einen Schritt des Empfangs von von der Leitungsabschlussvorrichtung kommenden, Inhaltsdaten (22) enthaltenden Rahmen durch die Netzabschlussvorrichtung über die Leitung enthält,
Verfahren, bei dem die von der Netzabschlussvorrichtung empfangenen Rahmen enthalten:
- ein Inhaltsfeld (22), das dazu bestimmt ist, die vom Telekommunikationsnetz kommenden Inhaltsdaten zu transportieren,
wobei das Verfahren **dadurch gekennzeichnet ist, dass** die Rahmen aufweisen:
- ein Rekonfigurationsfeld (24), das fähig ist, Rekonfigurationsdaten (24) zu transportieren, die für ein zur Übertragung der Rahmen zu verwendendes Kommunikationsprotokoll spezifisch sind,
wobei die Rekonfigurationsdaten geeignet sind, um eine Rekonfiguration eines Modems der Empfangs-Netzabschlussvorrichtung zu erlauben.

3. Verfahren nach den Ansprüchen 1 oder 2, bei dem das Rekonfigurationsfeld (24) in einem Vorspannfeld (21) des Rahmens enthalten ist.

4. Verfahren nach einem der Ansprüche 1 bis 3, bei dem das Rekonfigurationsfeld (24) ein Konfigurations-Herunterladefeld (27), um die Rekonfigurationsdaten zu transportieren, und ein Rekonfigurations-Vorspannfeld (26) enthält, um die Rekonfigurations-Austauschvorgänge zwischen der Leitungsabschlussvorrichtung und der mindestens einen Netzabschlussvorrichtung zu verwalten.

5. Rahmen (20), der dazu bestimmt ist, zwischen einer Leitungsabschlussvorrichtung und mindestens einer Netzabschlussvorrichtung übertragen zu werden, wobei die Leitungsabschlussvorrichtung über mindestens eine Leitung mit der mindestens einen Netzabschlussvorrichtung verbunden ist,
wobei der Rahmen **dadurch gekennzeichnet ist, dass** er Rekonfigurationsdaten (24) aufweist, die für ein zur Übertragung von Rahmen zwischen der Leitungsabschlussvorrichtung und der mindestens einen Netzabschlussvorrichtung zu verwendendes Kommunikationsprotokoll spezifisch sind,
und dass die Rekonfigurationsdaten geeignet sind, um eine Rekonfiguration eines Modems der Netzabschlussvorrichtung zu erlauben.

6. Rahmen nach dem vorhergehenden Anspruch, der ein Inhaltsfeld (22), das dazu bestimmt ist, Inhaltsdaten zu transportieren, die von einem Telekommunikationsnetz kommen, das mit der Leitungsabschlussvorrichtung verbunden ist, und ein Rekonfigurationsfeld (24) enthält, das fähig ist, Rekonfigurationsdaten zu transportieren, die fähig sind, das Protokoll zu verändern.

7. Leitungsabschlussvorrichtung, die dazu bestimmt ist, über mindestens eine Leitung mit mindestens einer Netzabschlussvorrichtung verbunden zu werden, wobei die Leitungsabschlussvorrichtung eingerichtet ist, um über die Leitung an mindestens eine der mindestens einen Netzabschlussvorrichtungen Inhaltsdaten enthaltende Rahmen zu übertragen,
wobei die Vorrichtung **dadurch gekennzeichnet ist, dass** sie eingerichtet ist, damit die Rahmen Rekonficrurationsdaten aufweisen, die für ein zur Übertragung der Rahmen zu verwendendes Kommunikationsprotokoll spezifisch sind, wobei die rekonfigurationsdaten geeignet sind, um eine Rekonfiguration eines Modems der Empfangs-Netzabschlussvorrichtung zu erlauben.

8. Netzabschlussvorrichtung, die dazu bestimmt ist, über mindestens eine Leitung mit einer Leitungsabschlussvorrichtung verbunden zu werden, wobei die Netzabschlussvorrichtung eingerichtet ist, um über die Leitung von der Leitungsabschlussvorrichtung kommende, Inhaltsdaten enthaltende Rahmen zu empfangen, wobei die Vorrichtung **dadurch gekennzeichnet ist, dass** sie eingerichtet ist, damit die Rahmen von der Leitungsabschlussvorrichtung kommende Rekonfigurationsdaten aufweisen, wobei die Rekonfigurationsdaten für ein zur Übertragung der Rahmen zu verwendendes Kommunikationsprotokoll spezifisch sind,
wobei die Rekonfigurationsdaten geeignet sind, um eine Rekonfiguration eines Modems der Netzabschlussvorrichtung zu erlauben.

9. Computerprogramm, das dazu bestimmt ist, in einem Speicher einer Leitungsabschlussvorrichtung gespeichert zu werden, die dazu bestimmt ist, über mindestens eine Leitung mit mindestens einer Netzabschlussvorrichtung verbunden zu werden, und/oder auf einem Speicherträger gespeichert zu werden, der dazu bestimmt ist, mit einem Lesegerät der Leitungsabschlussvorrichtung zusammenzuwirken, und/oder heruntergeladen zu werden, wobei das Programm Anweisungen enthält, um die folgenden Schritte auszuführen,
über die Leitung an mindestens eine der mindestens einen Netzabschlussvorrichtungen Inhaltsdaten enthaltende Rahmen, und
Rekonfigurationsdaten zu übertragen, die für ein zur Übertragung der Rahmen zu verwendendes Kommunikationsprotokoll spezifisch sind, wobei die Rekonfigurationsdaten geeignet sind, um eine Rekonfiguration eines Modems der Empfangs-Netzabschlussvorrichtung zu erlauben.

10. Computerprogramm, das dazu bestimmt ist, in einem Speicher einer Netzabschlussvorrichtung gespeichert zu werden, die dazu bestimmt ist, über mindestens eine Leitung mit einer Leitungsabschlussvorrichtung verbunden zu werden, und/oder auf einem Speicherträger gespeichert zu werden, der dazu bestimmt ist, mit einem Lesegerät der Netzabschlussvorrichtung zusammenzuwirken, und/oder heruntergeladen zu werden, wobei das Programm Anweisungen enthält, um die folgenden Schritte auszuführen,
über die Leitung von der Netzabschlussvorrichtung kommende, Inhaltsdaten enthaltende Rahmen und von der Leitungsabschlussvorrichtung kommende Rekonfigurationsdaten zu empfangen, wobei die Rekonfigurationsdaten für ein zur Übertragung der Rahmen zu verwendendes Kommunikationsprotokoll spezifisch sind, wobei die Rekonfigurationsdaten geeignet sind, um eine Rekonfiguration eines Modems der Netzabschlussvorrichtung zu erlauben.
